# EUROPÄISCHE PATENTSCHRIFT

(11) **EP 1 380 478 B1**
(45) Veröffentlichungstag und Bekanntmachung des Hinweises auf die Patenterteilung: **09.11.2005**
(21) Anmeldenummer: 03014222.8
(22) Anmeldetag: 25.06.2003
(51) Int. Cl.: B60R 25/00, B62D 25/10

(54) **Einbruchsicherung und Verfahren zu deren Herstellung**
Theft protection device and method of manufacture
Dispositif de protection antivol et procédé de fabrication

(30) Priorität: 10.07.2002 DE 10231055
(43) Veröffentlichungstag der Anmeldung: 14.01.2004
(73) Patentinhaber: AUDI AG, 85045 Ingolstadt (DE)
(72) Erfinder: Hinderer, Hartmut, 74172 Neckarsulm (DE); Gläser, Thomas, 85095 Denkendorf (DE)
(74) Vertreter: Patzelt, Heike Anna Maria

(56) Entgegenhaltungen:
- US-A- 4 706 775
- US-A- 5 879 117
- US-A- 5 983 539

## Beschreibung

Die Erfindung betrifft eine Einbruchsicherung und ein Verfahren zu deren Herstellung.

Wertobjekte, insbesondere Kraftfahrzeuge sind häufig der Gefahr eines unbefugten Eindringens ausgesetzt. Sie müssen und werden daher gegen Einbrüche gesichert. Da sich selbst durch ausgefeilte Einbruchsicherungen ein 100 %iger Schutz nicht erreichen läßt, wurden Verfahren entwickelt, mit denen die Sicherheit gegen unbefugtes Eindringen beurteilt wird, um auf dieser Grundlage beispielsweise die Kosten von Versicherungen zu bestimmen. Ein in diesem Zusammenhang bekanntes Verfahren ist der in Großbritannien entwickelte Thatcham-Test, der vorschreibt, daß die Außenabsicherung eines Kraftfahrzeuges derart gestaltet sein muß, daß die zum unbefugten Eindringen in ein Fahrzeug erforderliche Zeit t > 2 min ist.

An Wertobjekten, seien es Immobilien oder Fahrzeuge stellen die Durchbrüche in der Außenhülle, die erforderlich sind, um an der Hülle Gegenstände, beispielsweise Nummernschilder oder Spiegel zu befestigen, von je her einen Problembereich dar. An Haustüren beispielsweise wird ein solcher Bereich durch eine einbruchhemmende Rosette um das Türschloß gesichert. Eine solche Rosette baut jedoch sehr hoch und ist nur mit hohem Aufwand herstellbar.

Aus DE 690 01 078 T2 ist bekannt, im Zusammenhang mit Hohlräumen im Automontagebetrieb Teile zu verwenden, die frei von umgebenden Metallwänden montiert und anschließend in situ expandiert werden können, wobei Wände kontaktiert werden.

DE 694 07 788 T2 beschreibt ein Sicherheitsgehäuse für ein in ein Motorfahrzeug eingebautes elektrisches Gerät. Dieses Sicherheitsgehäuse überdeckt einen Teil des elektrischen Gerätes, welches unverändert bleiben kann, und es macht so das Gerät unzugänglich. Im Innern des Sicherheitsgehäuses ist vorzugsweise ein aushärtbares synthetisches Material vorgesehen, mit welchem elektrische Anschlüsse eingebettet werden können, wobei das synthetische Material in das Sicherheitsgehäuse eingespritzt ist. Dieser Anordnung vergleichbare Anordnungen sind im Zusammenhang mit einem Zündschloß und anderen Sicherungseinrichtungen ferner aus CH 164 069 A1, WO 89/07815 A1 und DE 43 25 657 C2 bekannt.

Aus der gattungsbildenden US-A-5 879 117 ist eine Vorrichtung zur Befestigung von Nummernschildern an Kraftfahrzeugen bekannt. Die Vorrichtung besteht aus einer Scheibe mit Befestigungsclipsen, einer Schraube und einer Schutzkappe. Nummernschild und Scheibe werden mittels der Schraube am Kraftfahrzeug montiert. Die Schutzkappe wird mit Hilfe der Befestigungsclipse aufgeclipst, so daß der Schraubenkopf von der Scheibe und der Schutzkappe eingeschlossen ist.

Der Erfindung liegt die Aufgabe zugrunde, eine Einbruchsicherung und ein Verfahren zu deren Herstellung zur Verfügung zu stellen, mit denen eine Verbesserung der Einbruchschutzes bei geringem Aufwand unter unterschiedlichsten konstruktiven Randbedingungen erzielbar ist.

Die Lösung dieser Aufgabe erfolgt erfindungsgemäß mit den Merkmalen der Ansprüche 1 bzw. 7.

Gemäß der Erfindung wird eine Einbruchsicherung vorgeschlagen, bei der eine einen Durchbruch in einer Kraftfahrzeugwand hinterlegende Kapsel vorgesehen ist, wobei die Kapsel über einen Überbrückungskörper an der kraftfahrzeughülle dicht anschließt, wobei der Überbrückungskörper als Schaumstoffkörper ausgebildet ist. Dadurch wird verhindert, daß Gegenstände, insbesondere Werkzeuge, durch den Durchbruch in der Objekthülle eingeführt werden können, mit denen hinter der Objekthülle liegende Einrichtungen, beispielsweise Einrichtungen von Schließanlagen erreicht und gegebenenfalls betätigt werden könnten. Ferner wird verhindert, daß Explosivstoffe eingebracht werden können, mit welchen eine Öffnung der Objekthülle versucht werden könnte. Gegenüber Rosetten oder anderen Sicherungsmaßnahmen im Bereich des Durchbruches hat die Erfindung ferner den Vorteil, daß sie von außen unsichtbar ist, was nicht nur zu einer verbesserten Optik führt sondern auch verhindert, daß das Objekt im Vorfeld ausgespäht und anschließend durch vorbereitete Maßnahmen gezielt geschädigt werden kann. Dadurch, daß der Überbrückungskörper als Schaumstoffkörper ausgebildet ist, werden mit der erfindungsgemäßen Einbruchsicherung Fertigungstoleranzen unmittelbar ausgeglichen, so daß eine unachtsame Montage nicht zwangsläufig zu einem Sicherheitsverlust führt.

Durch die Ausgestaltung des Überbrückungskörpers als Schaumstoffkörper, der gemäß einer bevorzugten Ausführungsform als Rohling an der Kapsel angeordnet und unter Wärmeeinwirkung gegen die Objekthülle expandiert ist, läßt sich eine besonders einfache und zuverlässige Montage gewährleisten.

Durch in dem Überbrückungskörper vorzugsweise eingebrachte Panzerungseinlagen, insbesondere Fasern oder Späne, läßt sich auch das Eindringen spitzer oder scharfer Gegenstände sicher verhindern.

Die erfindungsgemäße Einbruchsicherung ist insbesondere zur Verwendung bei einem Kraftfahrzeug vorgesehen und dort insbesondere im Bereich der Kofferraumwand, an der üblicherweise ein Nummernschild befestigt wird. Eine zu diesem Zwecke vorgesehene Blindnietmutter, die in einem Durchbruch angeordnet ist und selbst leicht herausgerissen werden kann, kann aus diese Weise zuverlässig abgesichert werden.

Wenn die Kapsel gegenüber dem Durchbruch in der Objekthülle über eine im wesentlichen parallel zu dieser verlaufende, gegenüber der Objekthülle fest angeordnete zweite Wand festgelegt ist, sind eine einfache Montage und sichere Funktion in gleicher Weise gewährleistet. Zudem wird eine Beeinträchtigung der Objekthülle selbst, die häufig eine Sichtseite bietet, vermieden. Eine in diesem Zusammenhang verwendete Kapsel ist vorzugsweise ein Kunststoffteil ist, welches durch Klippsen festlegbar ist.

Bei dem erfindungsgemäßen Verfahren zur Herstellung einer Einbruchsicherung wird im Bereich eines Durchbruches in einer Kraftfahrzeugwand eine den Durchbruch hinterlegende Kapsel angeordnet wobei zum Anschluß an die Kraftfahrzeugwand ein Überbrückungskörper aus Schaumstoff zwischen der Kapsel und der Kraftfahrzeugwand angeordnet wird. Durch das erfindungsgemäße Verfahren ist eine Einbruchsicherung herstellbar, die die oben beschrieben Vorteile aufweist.

Gemäß einer bevorzugten Verfahrensvariante wird der Überbrückungskörper als Schaumstoffkörperrohling an der Kapsel angeordnet, zusammen mit der Kapsel beim Zusammenbau montiert und anschließend unter Wärmeeinwirkung gegen die Kraftfahrzeugwand expandiert. Dies gewährleistet eine unaufwendige Montage.

Vorzugsweise erfolgt die Wärmeeinwirkung auf den Schaumstoffkörper rohling bei der Wärmebehandlung im Rahmen eines Lackierverfahrens eines Objektes, insbesondere eines Kraftfahrzeugteiles oder des gesamten Rohbaues. Dadurch wird eine separate, hinsichtlich der Fertigung aufwendige Sonderbehandlung der Einbruchsicherung erübrigt.

Fertigungstechnisch günstig ist es ferner, wenn - wie vorzugsweise vorgesehen - zur Anordnung der Kapsel diese gegenüber einer im wesentlichen parallel zur Kraftfahrzeugwand verlaufenden, gegenüber der Kraftfahrzeugwand fest angeordneten zweiten Wand festgelegt wird und wenn die Anordnung der Kapsel durch Klippsen erfolgt.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:
- Fig. 1: einen Schnitt durch eine perspektivisch gezeigte Kofferraumwand eines Personenkraftwagens im Bereich der Nummernschildbefestigung mit einer erfindungsgemäßen Einbruchsicherung gemäß einer bevorzugten Ausführungsform, und
- Fig. 2: einen Schnitt durch die Einbruchsicherung in Fig. 1 gemäß der Linie ll -ll in Fig. 1.

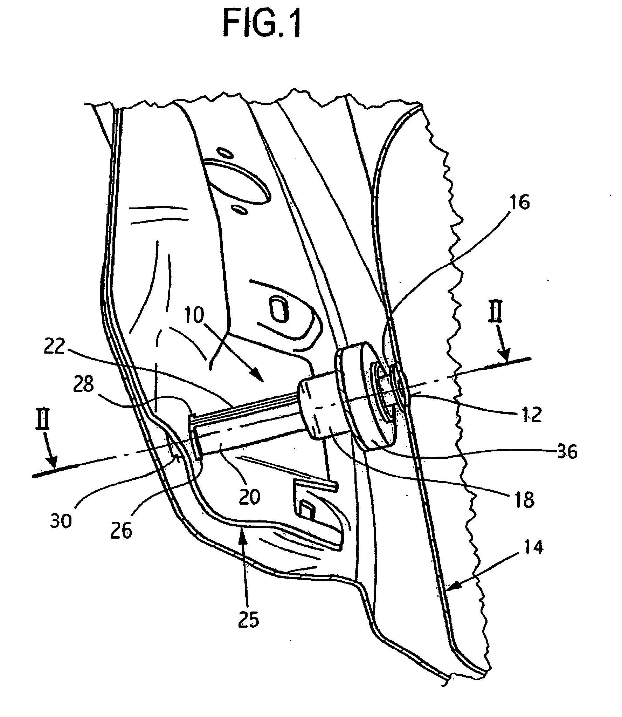

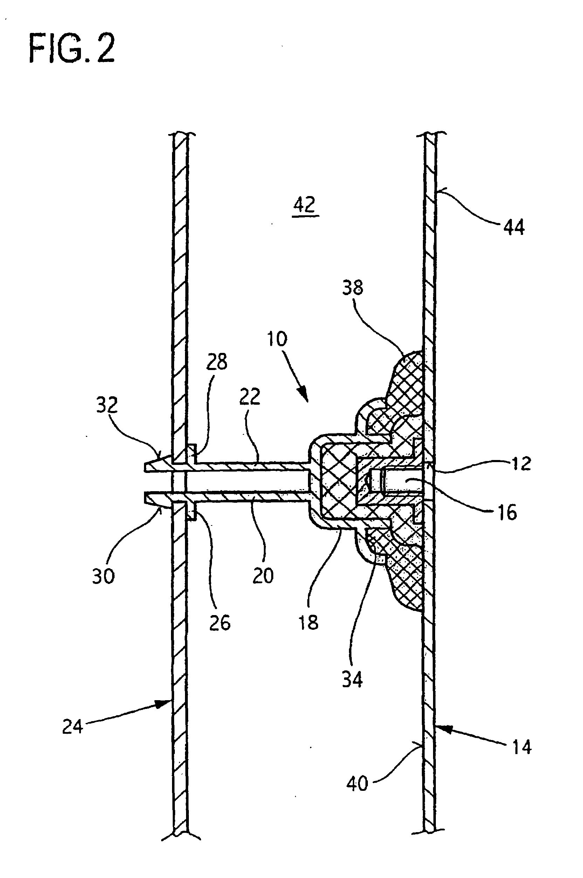

Die in den Figuren 1 und 2 gezeigte Einbruchsicherung 10 gemäß einer bevorzugten Ausführungsform sichert einen Durchbruch 12 für eine Nummernschildbefestigung in einer Kofferraumwand 14 ab, von der nur eine Blindnietmutter 16 gezeigt ist. Das zu sichernde Objekt ist in diesem Falle ein Personenkraftfahrzeug, wobei die Objekthülle dessen Außenhülle, insbesondere die Kofferraumwand 14 ist.

Die Einbruchsicherung 10 weist eine Kapsel 18 auf, die die Blindnietmutter 16 hinterlegt und teilweise umschließt und sich über zwei Rippen 20, 22, die eine Befestigungsvorrichtung bilden, an einer zweiten Wand 24 abstützen, wobei die zweite Wand 24 eine Kofferrauminnenwand oder eine Schloßverstärkung 25 ist. Die Rippen 20, 22 die aufeinander zu beweglich sind, weisen Widerlager 26, 28 sowie Einrastrampen 30, 32 auf, so daß sie in einem Durchbruch der Kofferrauminnenwand 24 einklippsbar sind, wobei das Blech der Kofferrauminnenwand 24 im eingeklippsten Zustand zwischen den Einrastrampen 30, 32 und der jeweils zugehörigen Widerlager 26, 28 liegt. Die beschriebene Verbindung läßt sich nach ihrer Montage von Fahrzeugaußen nicht lösen. Die Kapsel 18 und die Rippen 20, 22 mit den daran ausgebildeten Einrastrampen 30, 32 und Widerlagern 26, 28 sind als einstückiges Kunststoffteil gefertigt.

An dem den Rippen 20, 22 gegenüberliegenden Ende weist die Kapsel 18, die wie ein Topf oder eine Schale ausgebildet ist, einen Ringspalt 34 auf, in welchem vor einer Wärmebehandlung ein Schaumstoffkörperrohling 36 vollständig aufgenommen ist. In Fig. 1, die den Zustand von der Wärmebehandlung zeigt und in der die Kapsel 18 teilweise aufgebrochen gezeigt ist, ist erkennbar, daß der Schaumstoffkörperrohling 36 selbst in diesem Zustand ein Ring ist. Er wird vor der Montage der Einbruchsicherung 10 mit der Kapsel 18 vorkonfektioniert und dann während der Montage des Rohbaues des Kraftfahrzeuges gemeinsam als ein Bauteil montiert.

Geeignete Grundwerkstoffe für den Schaumstoffkörperrohling 36 sind im Stand der Technik, insbesondere aus der DE 690 01 078 T2 bekannt.

In Fig. 2, die den Zustand nach der Wärmebehandlung zeigt, ist erkennbar, daß der Schaumstoffkörperrohling 36 zu einem Überbrückungskörper 38 aus Schaumstoff expandiert ist und an den Innenseite 40 der Kofferraumwand 14 anhaftet. Die Wärmebehandlung erfolgt gemäß der einer Variante des erfindungsgemäßen Verfahrens während der Lackierung des Kraftfahrzeuges, wenn dieses als Rohbau die KTL-Anlage durchfährt, in welcher das Lackieren aufgrund einer Kataphorese mit anschließender Wärmebehandlung erfolgt.

Fig. 2 zeigt ferner, daß der Durchbruch 12 vollständig umschlossen ist, so daß es auch bei einem Entfernen der Blindnietmutter 16 nicht möglich ist, Fremdkörper in den zwischen der Kofferraumwand 14 und der Kofferrauminnenwand 24 gebildeten Hohlraum 42 einzuführen und darin etwaig befindliche Einrichtungen, insbesondere Kabel zu manipulieren. Es sei an dieser Stelle darauf hingewiesen, daß es zur Anordnung der Einbruchsicherung nicht erforderlich ist, die Kofferraumwand 14 zu verletzen, so daß deren Sichtseite 44 trotz Einbruchsicherung ein unverändertes Aussehen zeigt.

## Patentansprüche

1. Einbruchsicherung für ein kraftfahrzeug mit einer einen Durchbruch (12) in einer ersten Kraftfahrzeugwand (14) hinterlegenden Kapsel (18) und einem Überbrückungskörper (38) zum Anschluß an die kraftfahrzeugwand (14), **dadurch gekennzeichnet, daß** der Überbrückungskörper (38) als Schaumstoffkörper ausgebildet ist.

2. Einbruchsicherung nach Anspruch 1, **dadurch gekennzeichnet, daß** der Schaumstoffkörper als Rohling (36) an der Kapsel angeordnet und unter Wärmeeinwirkung gegen die Objekthülle (14) expandiert ist.

3. Einbruchsicherung nach Anspruch 1 oder 2, **dadurch gekennzeichnet, daß** in dem Überbrückungskörper (38) Panzerungseinlagen, insbesondere Fasern oder Späne, eingebracht sind.

4. Einbruchsicherung nach einem der Ansprüche 1 bis 3, **dadurch gekennzeichnet, daß** die erste Kraftfahrzeugwand eine Kofferraumaußenwand (14), ist.

5. Einbruchsicherung nach einem der Ansprüche 1 bis 4, **dadurch gekennzeichnet, daß** die Kapsel (18) gegenüber dem Durchbruch (12) in der Objekthülle (14) über eine im wesentlich parallel zu dieser verlaufende, gegenüber der Objekthülle (14) fest angeordnete zweite Wand (24) festgelegt ist.

6. Einbruchsicherung nach einem der Ansprüche 1 bis 5, **dadurch gekennzeichnet, daß** die Kapsel (18) ein Kunststoffteil ist, welches durch Klippsen festlegbar ist.

7. Verfahren zur Herstellung einer Einbruchsicherung nach einem der vorhergehenden Ansprüche, bei dem im Bereich eines Durchbruches in einer Kraftfahrzeugwand eine den Durchbruch hinterlegende Kapsel angeordnet wird, wobei zum Anschluß an die Kraftfahrzeugwand ein Überbrückungskörper aus Schaumstoff zwischen der Kapsel und der Kraftfahrzeugwand angeordnet wird.

8. Verfahren nach Anspruch 7, **dadurch gekennzeichnet, daß** der Überbrückungskörper, als Schaumstoffkörperrohling an der Kapsel angeordnet, zusammen mit der Kapsel beim Zusammenbau montiert und anschließend unter Wärmeeinwirkung gegen die Kraftfahrzeugwand expandiert wird.

9. Verfahren nach Anspruch 7 oder 8, **dadurch gekennzeichnet, daß** die Wärmeeinwirkung bei der Wärmebehandlung im Rahmen eines Lackierverfahrens eines Objektes, insbesondere eines Kraftfahrzeugteiles erfolgt.

10. Verfahren nach einem der Ansprüche 7 bis 9, **dadurch gekennzeichnet, daß** zur Anordnung der Kapsel diese gegenüber einer im wesentlichen parallel zu der Kraftfahrzeugwand verlaufenden, gegenüber der Kraftfahrzeugwand fest angeordneten zweiten Wand festgelegt wird.

11. Verfahren nach einem der Ansprüche 7 bis 10, **dadurch gekennzeichnet, daß** die Anordnung der Kapsel durch Klippsen erfolgt.

## Claims

1. Anti-burglary device for a motor vehicle, comprising a capsule (18) placed behind a passage (12) in a first motor vehicle wall (14) and a bridging element (38) for connection to the motor vehicle wall (14), **characterised in that** the bridging element (38) is designed as a foam material body.

2. Anti-burglary device according to Claim 1, **characterised in that** the foam body is arranged on the capsule as a blank (36) and under the effect of heat expanded towards the object sleeve (14).

3. Anti-burglary device according to Claim 1 or 2, **characterised in that** reinforcing inserts, in particular fibres or chips, are placed within the bridging element (38).

4. Anti-burglary device according to one of Claims 1 to 3, **characterised in that** the first motor vehicle wall is the outside wall of a boot (14).

5. Anti-burglary device according to one of Claims 1 to 4, **characterised in that** the capsule (18) is fixed relative to the passage (12) in the object sleeve (14) via a second wall (24) which extends substantially parallel thereto and which is fixed relative to the object sleeve (14).

6. Anti-burglary device according to one of Claims 1 to 5, **characterised in that** the capsule (18) is a plastic component which is secured by being clipped.

7. Method of manufacturing an anti-burglary device according to one of the above claims, having in the area of a passage in a motor vehicle wall a capsule laid behind the passage, and for attachment to the motor vehicle wall is arranged a bridging element of foam material between the capsule and the motor vehicle wall.

8. Method according to Claim 7, **characterised in that** the bridging element, as a foam material blank arranged on the capsule, is during assembly mounted together with the capsule and subsequently expanded against the motor vehicle wall under the effect of heat.

9. Method according to Claim 7 or 8, **characterised in that** the effect of heat during the heat treatment takes place within a painting process of an object, in particular a motor vehicle component.

10. Method according to one of Claims 7 to 9, **characterised in that** the capsule is, for the purpose of securing it, fixed relative to a fixed second wall which extends substantially parallel to the motor vehicle wall and which is fixed relative to the second wall.

11. Method according to one of Claims 7 to 10, **characterised in that** the capsules are clipped on.

## Revendications

1. Dispositif de protection anti-vol pour un véhicule automobile, comportant une capsule (18), posée à l'arrière d'un passage (12) dans une première paroi du véhicule (14), et un corps de recouvrement (38) pour l'assemblage contre la paroi du véhicule (14), **caractérisé en ce que** le corps de recouvrement (38) est conçu sous forme de corps en mousse.

2. Dispositif de protection anti-vol selon la revendication 1, **caractérisé en ce que** le corps en mousse est disposé sous forme de flan (36) sur la capsule et se dilate contre l'enveloppe de l'objet (14) sous l'effet de la chaleur.

3. Dispositif de protection anti-vol selon la revendication 1 ou 2, **caractérisé en ce que** des inserts de renfort, en particulier des fibres ou copeaux, sont insérés dans le corps de recouvrement (38).

4. Dispositif de protection anti-vol selon l'une quelconque des revendications 1 à 3, **caractérisé en ce que** la première paroi du véhicule automobile est une paroi extérieure d'un coffre (14).

5. Dispositif de protection anti-vol selon l'une quelconque des revendications 1 à 4, **caractérisé en ce que** la capsule (18) est fixée par rapport au passage (12) dans 1'enveloppe de l'objet (14) par l'intermédiaire d'une deuxième paroi (24) s'étendant sensiblement parallèle à l'enveloppe de l'objet (14) et agencée de manière fixe par rapport à cette dernière.

6. Dispositif de protection anti-vol selon l'une quelconque des revendications 1 à 5, **caractérisé en ce que** la capsule (18) est une pièce en matière plastique, qui peut être fixée par des clips.

7. Procédé de fabrication d'un dispositif de protection anti-vol selon l'une quelconque des revendications précédentes, dans lequel, dans la zone d'un passage dans une paroi du véhicule automobile, est mise en place une capsule posée à l'arrière, sachant que, pour l'assemblage contre la paroi du véhicule automobile, un corps de recouvrement en mousse est disposé entre la capsule et la paroi du véhicule.

8. Procédé selon la revendication 7, **caractérisé en ce que** le corps de recouvrement, sous forme de flan à corps en mousse disposé contre la capsule, est monté conjointement avec la capsule au moment du montage et se dilate ensuite contre la paroi du véhicule automobile sous l'effet de la chaleur.

9. Procédé selon la revendication 7 ou 8, **caractérisé en ce que** l'effet thermique est généré au cours du traitement thermique dans le cadre d'un procédé de peinture d'un objet, en particulier une pièce d'un véhicule automobile.

10. Procédé selon l'une quelconque des revendications 7 à 9, **caractérisé en ce que** pour la mise en place de la capsule, celle-ci est fixée par rapport à une deuxième paroi s'étendant sensiblement parallèle à la paroi du véhicule automobile et agencée fixe par rapport à la paroi du véhicule automobile.

11. Procédé selon l'une quelconque des revendications 7 à 10, **caractérisé en ce que** la mise en place de la capsule est réalisée au moyen de clips.
